# EUROPEAN PATENT SPECIFICATION

(11) **EP 1 495 849 B1**
(45) Date of publication and mention of the grant of the patent: **29.03.2006**
(21) Application number: 03015273.0
(22) Date of filing: 07.07.2003
(51) Int. Cl.: B29C 43/18, B29C 45/14, B29C 70/78

(54) **Method and apparatus for producing a panel of plastics material**
Verfahren und Vorrichtung zur Herstellung eines Paneels aus einem Kunststoffmaterial
Procédé et dispositif pour la fabrication d'un panneau en matériau plastique

(43) Date of publication of application: 12.01.2005
(73) Proprietor: CRS Srl Centro Ricerche e Sperimentazioni, 10060 Frossasco (IT)
(72) Inventor: Cesano, Franco, 10060 San Secondo di Pinerolo (Torino) (IT)
(74) Representative: Marchitelli, Mauro

(56) References cited:
- EP-A- 0 861 714
- FR-A- 2 720 319
- US-A- 6 004 498
- US-A- 6 126 769

## Description

The present invention relates to a method and an apparatus for producing a panel of plastic material. The invention was developed in particular for the production of panels having at least a first region formed by at least one plate of thermoplastic or thermosetting material, possibly coated, moulded by thermo-compression and at least one second region constituted by injection moulded thermoplastic material. Panels of this kind are used in particular as inner covering panels for vehicle doors, in which the panel region constituted by the coated plate of thermoplastic material is aesthetically more valuable and is used for the upper part of the panel, whilst the injection moulded part made of thermoplastic material, which is less delicate, extends on the lower part of the panel, more prone to be hit by the feet of the persons stepping into and out of the vehicle.

Currently used solutions for the production of panels of this kind require the use of two independent moulding apparatuses, one for thermo-compression moulding of the coated plates of thermoplastic material and the other for the production by means of injection moulding of the complementary panel region. The two panel parts are mutually joined in a subsequent step by means of mechanical anchoring, ultrasonic welding or other fastening method.

European Patent Application No. 1153725 by the same Applicant describes a method and an apparatus for forming, by injection moulding, a component anchored onto a surface of a plate of thermoplastic material whilst said plate is moulded by thermo-compression between the mutually opposite surfaces of two half-moulds. According to the method and the apparatus described therein, an injection moulding cavity is obtained in one of the half-shells and terminates on the thermo-compression moulding surface of the same half-shell.

FR-A- 2720319 discloses a method according to the preamble of claim 1 for incorporating a textile decoration in an injection moulded plastic panel, consisting of using a two parts mould; a first part of which corresponds to the decoration area and the second part corresponds to the non-decorated area. A decorative sheet is placed over the first part and the mould is closed. In the mould cavity the volume under the decorative sheet is isolated from the remaining volume. Plastic material is successively injected into the isolated volumes.

The present invention has the object of providing a method and an apparatus which allow to obtain, in a simpler and more rapid manner, panels constituted by two complementary regions, made up one by a plate of thermoplastic material and the other one by injection moulded material.

According to the present invention, said object is achieved by a method and by an apparatus having the characteristics set out in the claims.

The present invention will now be described in detail with reference to the accompanying drawings, provided purely by way of non limiting example in which:
- Figure 1 is a schematic front view of an interior lining panel for vehicle doors obtained by means of a method and an apparatus according to the present invention,
- Figure 2 is a section according to the line II-II of Figure 1,
- Figures 3 through 6 are schematic sections showing the steps for producing the panel of Figure 1, and
- Figure 7 is a section in enlarged scale according to the line VII-VII of Figure 5.

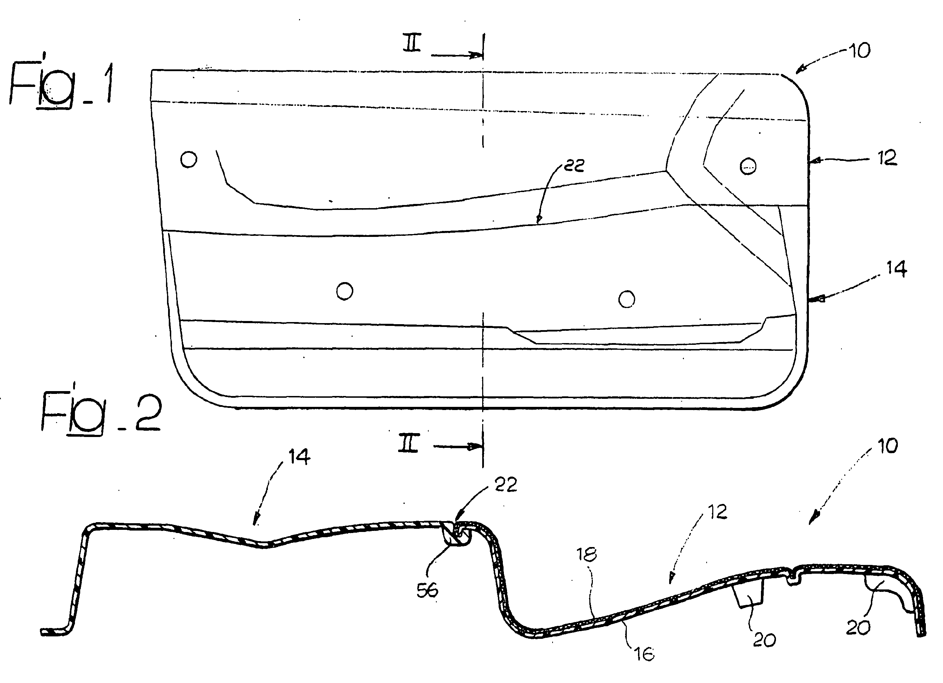

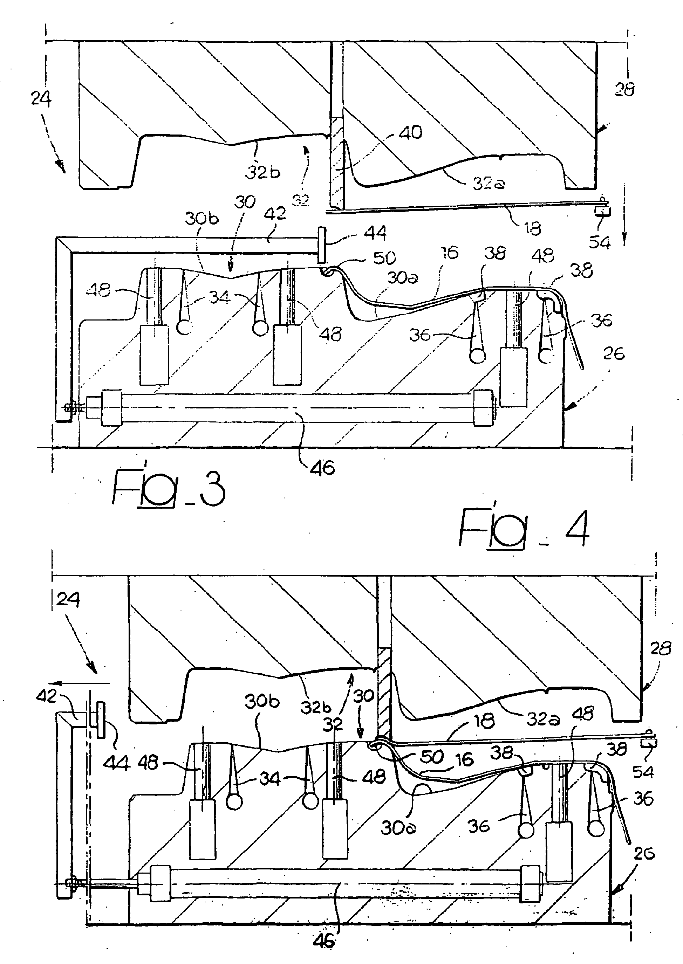

With reference to Figures 1 and 2, the reference number 10 designates an inner lining panel for vehicles comprising a first region 12 and a second region 14 complementary to the first region 12. The first region 12 is formed by a plate 16 of thermoplastic material moulded by thermo-compression and provided with an aesthetic lining 18 applied onto the visible surface during the moulding step. The plate of thermoplastic material can be provided with inserts 20 made of injection moulded plastic material formed during the thermo-compression moulding of the plate 16, as described in detail in the document EP-A-1153725 by the same Applicant. The second region 14 of the panel 10 is obtained by injection of plastic material in the manner described below. The second region 14 is permanently fastened to the first region 12 along a junction area 22 which extends on the front face and on the rear face of the panel 10 along the entire longitudinal edge shared by the two regions 12, 14. The panel 10 including thermo-compression moulded plate 16 with the related lining 12 and the injection-moulded region 14 is obtained with a single thermo-compression-injection moulding operation, in the manner described below.

With reference to Figures 3 through 6, the reference number 24 designates an apparatus according to the present invention for producing the panel 10. The apparatus 24 comprises a lower half-mould 26 and an upper half-mould 28, movable relative to one another between an open position and a closed position. The half-moulds 26, 28 have respective mutually cooperating moulding surfaces 30, 32. Each of the moulding surfaces 30, 32 is subdivided into a thermo-compression moulding region 30a, 32a and into an injection moulding region 30b, 32b, mutually complementary. The half-moulds 26, 28 are provided with conventional cooling means (not shown). In one or in both the half-moulds 26, 28 is formed at least one injection channel which terminates on the injection moulding region 30b, 32b of the respective half-mould. In the example illustrated in the drawing, two injection channels 34 formed in the lower half-mould 26 are schematically represented. The figures also illustrate auxiliary injection channels 26 which communicate with injection moulding seats 38 that terminate on the thermo-compression moulding region 30a, to form by means of injection moulding the inserts 20 on the rear face of the plate of thermoplastic material 16, as described in the aforementioned document EP-A-1153725.

The upper half-mould 28 is preferably provided with a retaining element 40 able to slide relative to the upper half-mould 28 between an extracted position and a rearward position along a direction parallel to the direction of closure of the half-moulds. The retaining element 40 is destined to hold an edge of the plate of thermoplastic material 16 and of the lining 18 in correspondence with the junction line between the thermo-compression and injection moulding areas. Multiple retaining elements 40 can be provided, distributed along said junction line, or a single retaining element 40 can be provided, extending along all or a substantial part of the length of the border line between the compression moulding regions and the injection moulding regions.

The lower half-mould 26 is preferably provided with a positioning element 42 having a positioning surface 44. The positioning element 42 is preferably borne by an actuator 46 which allows to displace the positioning element 42 between an operative position shown in Figure 3 and an inoperative position shown in Figures 4, 5 and 6. In the operative position, the positioning surface 44 extends in correspondence with the border line between the thermo-compression moulding region 30a and the injection moulding region 30b. Alternatively, the positioning surface 44 can be mounted able to slide in the vertical direction in the lower half-mould 26.

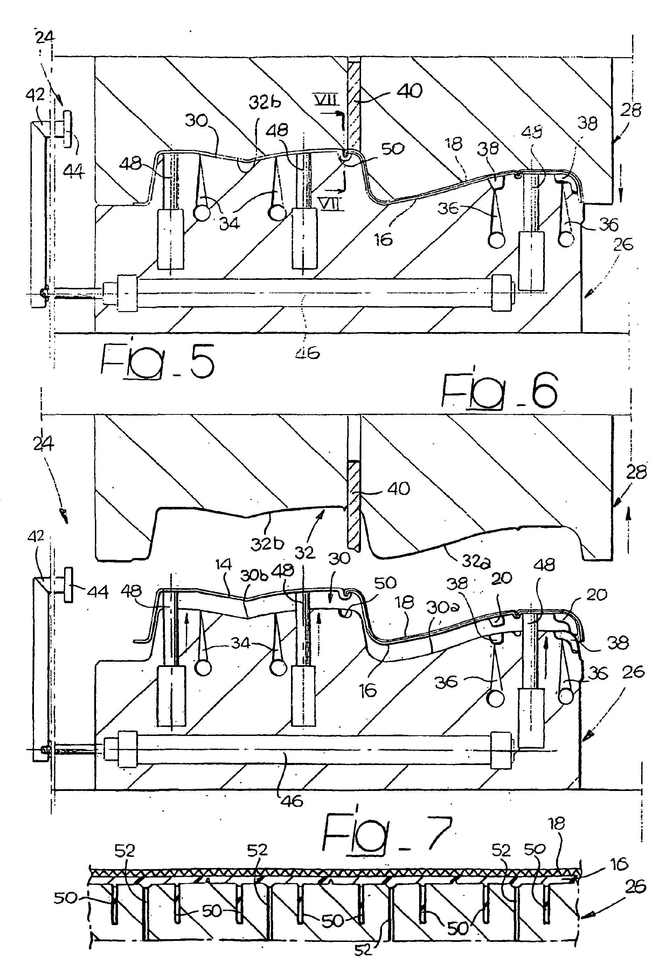

The lower half-mould 26 is preferably provided with a plurality of extractor elements 48 movable between an inoperative position shown in Figures 3, 4 and 5 and the operative position shown in Figure 6.

With reference to Figure 7, the lower half-mould 26 is provided with a plurality of grooves 50 which terminate on the moulding surface 30 and extend astride the compression moulding region 30a and the injection moulding region 30b. Moreover, in the lower half-mould 26 can be provided suction channels 52 which terminate on the surface 30 along the border line between the thermo-compression moulding region 30a and the injection moulding region 30b.

The operation of the apparatus described above is as follows. With reference initially to Figure 3, at least a plate of thermoplastic or thermosetting material 16 in a plastic state is laid onto the thermo-compression moulding region 30a of the lower half-mould 26. In this step, the upper half-mould 28 is in a raised position and it bears a frame 54 whereon is stretched a sheet of lining fabric 18. The positioning element 42 is in the operative position, in which the surface 44 extends along the border line between the moulding regions 30a and 30b. The positioning surface 44 serves as a reference to lay the plate 16 onto the region 30a automatically, so that after the laying an edge of the plate 16 extends along the border line between the moulding regions 30a and 30b. The suction channels 52 are connected to a suction source and hold the edge of the plate 16 along the aforesaid border line. The retaining element 40 is in its lowered position and an edge of the lining sheet 18 extends below the retaining element 40.

In the subsequent step shown in Figure 4, the positioning element 42 is brought to its inoperative position outside the half-moulds or inside the lower half-mould 26 and the upper half-mould 28 is lowered. Figure 4 shows the moment in which the retaining element 40 presses the edge of the lining edge 18 against the edge of the plate 16. The upper half-mould 28 continues to be lowered down to the completely closed position shown in Figure 5. In this condition, the thermo-compression moulding regions 30a and 32a carry out the thermo-compression moulding of the plate 16 and simultaneously apply the lining sheet 18 against the upper surface of the plate 16. As can be seen in Figure 5, in the closed configuration of the half-moulds 26, 28, the injection moulding regions 30b and 32b facing each other define an injection moulding cavity which communicates with an end of the plate 16. In the closed condition of the half-moulds 26, 28 plastic material is injected into the injection moulding cavity defined between the injection moulding regions 30b and 32b. The injected plastic material fills the cavity and solidifies in contact with the regions 30b and 32b. The injected plastic material also penetrates into the grooves 50 which extend astride the border line between the compression moulding and injection moulding regions and forms a series of mutually parallel ribs, one of which is designated as 56 in Figure 2, which merge on the lower surface of the plate of thermoplastic material 16 achieving a secure bond between the plate 16 and the panel region 14 obtained by injection moulding. Simultaneously with the injection of plastic material between the injection moulding surfaces 30b and 32b, plastic material is injected into the seats 38 via the auxiliary injection channels 36 to form the inserts 20 on the lower surface of the plate 16. Once the injected plastic material is solidified and the plate 16 is hardened, the upper half-mould 28 is raised and the extractors 48 are activated to detached the finished panel from the surface 30.

## Claims

1. A method for producing a panel comprising at least one first region (12) and a second region (14), comprising the steps of:
- providing two half-moulds (26, 28) having respective moulding surfaces (30, 32), each moulding surface (30, 32) having a first region (30a, 32a) and a second region (30b, 32b);
- placing a lining (18) between the two first regions (30a, 32a) of said moulding surfaces (30, 32);
- closing the half-moulds (26, 28);
- injecting plastic material into a space defined between the two mutually facing second regions (30b, 32b) of said moulding surfaces (30, 32);
**characterised in that** it comprises the step of positioning at least one plate of thermoplastic or thermosetting material in a plastic state between the two first regions (30a, 32a) of said moulding surfaces (30, 32) and compressing the plate (16) and said lining (18) between said two first regions (30a, 32a), so as to produce a panel having a first region (12) of lined compression-moulded thermoplastic or thermosetting material and a second region (14) of injection-moulded thermoplastic material.

2. A method as claimed in claim 1, **characterised in that** it comprises the step of retaining an edge of the plate of thermoplastic or thermosetting material (16) along a border line between said first and second moulding regions (30a, 32a, 30b, 32b).

3. A method as claimed in claim 1, **characterised in that** it comprises the step of forming ribs (56) integral with said injection moulded panel region (14), said ribs (56) being welded to an end area of said plate (16).

4. A method as claimed in claim 4, **characterised in that** it comprises the step of pressing an edge of said lining (18) against a corresponding edge of said plate (16).

5. A method as claimed in claim 2, **characterised in that** it comprises the step of providing a reference surface (44) along said border line between said thermo-compression moulding regions (30a, 32a) and said injection moulding regions (30b, 32b) to lay said plate (16) with an edge thereof along said border line.

6. An apparatus for producing a panel comprising at least a region (12) of compression-moulded thermoplastic or thermosetting material and at least a region (14) of injection-moulded thermoplastic material, comprising a first and a second half-mould (26, 28) having respective moulding surfaces (30, 32), **characterised in that** said moulding surfaces (30, 32) have respective compression moulding regions (30a, 32a) and respective injection moulding regions (30b, 32b) facing each other.

7. An apparatus as claimed in claim6, **characterised in that** it comprises at least one injection channel (34) formed in one of said half-moulds (26, 28) and open on the respective injection moulding region (30b, 32b).

8. An apparatus as claimed in claim 6, **characterised in that** one of said half-moulds (26) comprises a plurality of grooves (50) which extend astride a border line between the compression moulding region (30a) and the injection moulding region (30b) of the moulding surface (30).

9. An apparatus as claimed in claim 6, **characterised in that** it comprises a retaining element (40) borne by one of said half-moulds (28) and movable relative to said half-mould (28) in a direction parallel to the direction of closure of the half-moulds, said retaining element (40) being able to press an edge of a lining sheet (18) against a corresponding edge of a plate of thermoplastic material (16) set down on the complementary half-mould (26).

10. An apparatus as claimed in claim 6, **characterised in that** it comprises a positioning element (42) movable between an operative position and an inoperative position, in which said positioning element (42) has a positioning surface (44) which in the aforesaid operative position extends in correspondence with a border line between said compression moulding and injection moulding regions (30a, 3ab).

## Patentansprüche

1. Verfahren zur Herstellung eines Paneels, das wenigstens eine erste Zone (12) und eine zweite Zone (14) umfasst, mit den Schritten:
- Bereitstellen zweier Formhälften (26, 28) mit jeweiligen Formgebungsflächen (30, 32), wobei jede Formgebungsfläche (30, 32) eine erste Zone (30a, 32a) und eine zweite Zone (30b, 32b) aufweist;
- Platzieren einer Verkleidung (18) zwischen den zwei ersten Zonen (30a, 32a) der Formgebungsflächen (30, 32);
- Schließen der Formhälften (26, 28);
- Einspritzen von Kunststoffmaterial in einen zwischen den zwei einander zugewandten zweiten Zonen (30b, 32b) der Formgebungsflächen (30, 32) abgegrenzten Raum,
**dadurch gekennzeichnet, dass** es den Schritt Positionieren wenigstens einer Platte aus thermoplastischem oder wärmehärtbarem Material in einem formbaren Zustand zwischen den zwei ersten Zonen (30a, 32a) der Formgebungsflächen (30, 32) und Pressen der Platte (16) und der Verkleidung (18) zwischen den zwei ersten Zonen (30a, 32a) umfasst, um ein Paneel mit einer ersten Zone (12) aus verkleidetem, formgepresstem thermoplastischem oder wärmehärtbarem Material und einer zweiten Zone (14) aus formgespriztem thermoplastischem Material herzustellen.

2. Verfahren nach Anspruch 1, **dadurch gekennzeichnet, dass** es den Schritt Halten eines Randes der Platte aus thermoplastischem oder wärmehärtbarem Material (16) entlang einer Saumlinie zwischen den ersten und zweiten Formgebungszonen (30a, 32a, 30b, 32b) umfasst.

3. Verfahren nach Anspruch 1, **dadurch gekennzeichnet, dass** es den Schritt Formen von Rippen (56) einteilig mit der Spritzguss-Paneelzone (14) umfasst, wobei die Rippen (56) an einen Endbereich der Platte (16) geschweißt werden.

4. Verfahren nach Anspruch 4, **dadurch gekennzeichnet, dass** es den Schritt Drücken eines Randes der Verkleidung (18) gegen einen entsprechenden Rand der Platte (16) umfasst.

5. Verfahren nach Anspruch 2, **dadurch gekennzeichnet, dass** es den Schritt Bereitstellen einer Bezugsfläche (44) entlang der Saumlinie zwischen den Thermo-Formpresszonen (30a, 32a) und den Spritzgusszonen (30b, 32b) umfasst, um die Platte (16) mit einem Rand davon entlang der Saumlinie anzulegen.

6. Vorrichtung zur Herstellung eines Paneels, das wenigstens eine Zone (12) aus formgepresstem thermoplastischem oder wärmehärtbarem Material und wenigstens eine Zone (14) aus formgespritztem thermoplastischem Material umfasst und eine erste und eine zweite Formhälfte (26, 28) mit jeweiligen Formgebungsflächen (30, 32) umfasst,
**dadurch gekennzeichnet, dass** die Formgebungsflächen (30, 32) jeweilige Formpresszonen (30a, 32a) und jeweilige Spritzgusszonen (30b. 32b) aufwaisen, die einander zugewandt sind.

7. Vorrichtung nach Anspruch 6, **dadurch gekennzeichnet, dass** sie wenigstens einen Einsprüzkanal (34) umfasst, der in einer der Formhälften (26, 28) geformt und auf der jeweiligen Spritzgusszone (30b, 32b) offen ist.

8. Vorrichtung nach Anspruch 6, **dadurch gekennzeichnet, dass** eine der Formhälften (26) eine Vielzahl von Nuten (50) umfasst; die sich rittlings auf einer Saumlinie zwischen der Formpresszone (30a) und der Spritzgusszone (30b), der Formgebungsfläche (30) erstrecken.

9. Vorrichtung nach Anspruch 6, **dadurch gekennzeichnet, dass** sie ein Halteelement (40) umfasst, das von einer der Formhälften (28) getragen und bezüglich der formhälfte (28) in einer Richtung parallel zur Schließrichtung der Formhälften beweglich ist, wobei das Halteelement (40) imstande ist, einen Rand eines Verkleidungsblechs (18) gegen einen entsprechenden Rand einer auf der komplementären Formhälfte (26) abgesetzten Platte aus thermoplastischem Material (16) zu drücken.

10. Vorrichtung nach Anspruch 6. **dadurch gekennzeichnet, dass** sie ein zwischen einer Betriebsstellung und einer Nichtbetriebsstellung bewegliches Verschiebeelement (42) umfasst, wobei das Verschiebeelement (42) eine Anschlagfläche (44) aufweist, die sich in der genannten Betriebsstellung in Übereinstimmung mit einer Saumlinie zwischen der Formpress- und der Spritzgusszone (30a, 32b) erstreckt.

## Revendications

1. Procédé pour produire un panneau comprenant au moins une première région (12) et une seconde région (14), comprenant les étapes consistant à :
fournir deux demi-moules (26, 28) ayant des surfaces de moulage respectives (30, 32), chaque surface de moulage (30, 32) ayant une première région (30a, 32a) et une seconde région (30b, 32b) ;
placer un revêtement (18) entre les deux premières régions (30a, 32a) desdites surfaces de moulage (30, 32) ;
fermer les demi-moules (26,28) ;
injecter un matériau plastique dans un espace défini entre les deux secondes régions se faisant face mutuellement (30b, 32b) desdites surfaces de moulage (30, 32) ;
**caractérisé en ce qu'**il comprend l'étape consistant à positionner au moins une plaque de matériau thermoplastique ou thermodurcissable dans un état plastique entre les deux premières régions (30a, 32a) desdites surfaces de moulage (30, 32) et comprimer la plaque (16) et ledit revêtement (18) entre lesdites deux premières régions (30a, 32a), afin de produire un panneau ayant une première région (12) de matériau thermoplastique ou thermodurcissable moulé par compression garni d'un revêtement et une seconde région (14) de matériau thermoplastique moulé par injection.

2. Procédé selon la revendication 1, **caractérisé en ce qu'**il comprend l'étape consistant à retenir un bord de la plaque de matériau thermoplastique ou thermodurcissable (16) le long d'une ligne limite entre lesdites premières et secondes régions de moulage (30a, 32a, 30b, 32b).

3. Procédé selon la revendication 1, **caractérisé en ce qu'**il comprend l'étape consistant à former des nervures (56) solidaires avec ladite région de panneau moulée par injection (14), lesdites nervures (56) étant soudées à une zone d'extrémité de ladite plaque (16).

4. Procédé selon la revendication 4, **caractérisé en ce qu'**il comprend l'étape consistant à comprimer un bord dudit revêtement (18) contre un bord correspondant de ladite plaque (16).

5. Procédé selon la revendication 2, **caractérisé en ce qu'**il comprend l'étape consistant à foumir une surface de référence (44) le long de ladite ligne limite entre lesdites régions de moulage par thermo-compression (30a, 32a) et lesdites régions de moulage par injection (30b, 32b) pour placer ladite plaque (16) avec un bord de celle-ci le long de ladite ligne limite.

6. Appareil pour produire un panneau comprenant au moins une région (12) de matériau thermoplastique ou thermodurcissable moulé par compression et au moins une région (14) de matériau thermoplastique moulé par injection, comprenant un premier et un second demi-moule (26, 28) ayant des surfaces de moulage respectives (30,32), **caractérisé en ce que** lesdites surfaces de moulage (30, 32) ont des régions de moulage par compression respectives (30a, 32a) et des régions de moulage par injection respectives (30b, 32b) se faisant face.

7. Appareil selon la revendication 6, **caractérisé en ce qu'**il comprend au moins un canal d'injection (34) formé dans un desdits demi-moules (26, 28) et ouvert sur la région de moulage par injection respective (30b, 32b).

8. Appareil selon la revendication 6, **caractérisé en ce qu'**un desdits demi-moules (26) comprend une pluralité de rainures (50) qui s'étendent des deux côtés d'une ligne limite entre la région de moulage par compression (30a) et la région de moulage par injection (30b) de la surface de moulage (30).

9. Appareil selon la revendication 6, **caractérisé en ce qu'**il comprend un élément de retenue (40) supporté par un desdits demi-moules (28) et mobile par rapport audit demi-moule (28) dans une direction parallèle à la direction de fermeture des demi-moules, ledit élément de retenue (40) étant capable de comprimer un bord d'une feuille de revêtement (18) contre un bord correspondant d'une plaque de matériau thermoplastique (16) déposée sur le demi-moule complémentaire (26).

10. Appareil selon la revendication 6, **caractérisé en ce qu'**il comprend un élément de positionnement (42) mobile entre une position opérationnelle et une position non opérationnelle, dans lequel ledit élément de positionnement (42) a une surface de positionnement (44) qui dans la position opérationnelle susdite s'étend en correspondance avec une ligne limite entre lesdites régions de moulage par compression et de moulage par injection (30a, 30b).
